# EUROPEAN PATENT APPLICATION

(11) **EP 2 525 280 A1**
(43) Date of publication of application: **21.11.2012**
(21) Application number: 11004078.9
(22) Date of filing: 17.05.2011
(51) Int. Cl.: G06F 3/043, G06F 3/041

(54) **Method for detecting a touch-and-hold touch event and corresponding device**

(71) Applicant: Elo Touch Solutions, Inc., Menlo Park, CA 94025 (US)
(72) Inventor: Benhamouda, Franck, 78370 Plaisir (FR); Ben Abdelounis, Houcine, 69006 Lyon (FR); Nowottnick, Peter, 78180 Montigny le Bretonneux (FR)
(74) Representative: Grünecker, Kinkeldey, Stockmair & Schwanhäusser

(57) **Abstract**

The invention relates to a method for determining a touch-and-hold touch event on a touch sensitive interaction surface of a touch sensing device comprising the steps of: a) determining a touch location of the touch event based on a sensed acoustic signal and b) determining whether the touch event comprises a hold touch event based on an integrated acoustic signal. By integrating the acoustic signal it thus becomes possible to decide whether a touch or a touch-and-hold touch event occurred on the interaction surface using the same kind of signal used to determine the location of the impact at the beginning of the touch event. The invention furthermore relates to a device configured to carry out the inventive method.

## Description

The invention relates to a method for determining a touch-and-hold touch event on a touch sensitive interaction surface of a touch sensing device and also to a touch sensing device comprising a touch sensitive interaction surface to carry out such a method.

Touch sensitive devices such as touch screens are widely used as input devices for providing instruction to an electronic device, like a mobile phone, an electronic book reader, a laptop or vending and automatic teller machines. Various technologies exist to enable this functionality, like the capacitive or resistive touch sensitive technology but also acoustic based technologies based on surface acoustic waves or on bending waves propagating inside the interaction surface.

Touch sensitive devices based on bending waves determine a position of an impact on a touch sensitive surface of the device based on the analysis of the propagation of the bending wave created due to the impact realized by the user when touching the touch sensitive interaction surface. EP 1512116 A1 describes such a method.

An important functionality of the touch sensitive device is the capability to discriminate a touch event from a touch-and-hold touch event during which the user keeps his finger in contact with the touch sensitive interface to provide a different instruction to the device compared to the simple touch event. This is comparable to a simple mouse click and a mouse click down action. To provide this functionality, EP 2214082 A1 proposed to combine the acoustic technology responsible for determining the touch location with a different kind of sensing means, e.g. a capacitor, responsible for determining the hold part of the touch event. Thus additional hardware of a different kind needs to be provided to offer the touch-and-hold functionality. This leads to a more complex product design.

It would, however, be advantageous, if not only the touch localization but also the hold part of a touch-and-hold touch event could be identified using the same kind of hardware components.

It is therefore an object of the present invention to provide a simplified method for determining a touch-and-hold touch event.

This object is achieved with the methods described herein. The inventive method for determining a touch-and-hold touch event on a touch sensitive interaction surface of a touch sensing device comprises the steps of: a) determining the touch location of the touch event based on at least one sensed acoustic signal and b) determining whether the touch event is a touch-and-hold touch event based on an integrated acoustic signal.

By using an integrated acoustic signal in step b), a signal contribution due to the presence of a user's finger or any other object held by the user and touching the device can be better identified, as the ratio of useful signal to noise can be improved. Thus, a reliable decision whether the touch event comprises a hold touch event or not can be done based on the integrated sensed signal.

In a preferred embodiment, the method can further comprise prior to step a) and b) a step of receiving at least one acoustic signal sensed by at least one sensing means, wherein step a) comprises determining the touch location based on at least one of the at least one sensed received acoustic signal and step b) comprises integrating at least one of the at least one received sensed signal.

In a preferred embodiment, step a) and b) can be carried out using the same sensed acoustic signals. Thus both the localization and hold determination can be based on the same sensed signal. As a consequence only one type of sensing means is necessary to implement in the touch sensing device.

According to an advantageous embodiment step a) can comprise analyzing a plurality of sensed acoustic signals from a plurality of sensing means to determine the touch location, and step b) can comprise adding the integrated sensed acoustic signals from the plurality of sensing means and determining whether a hold touch event is present based on the added value. The localization of the touch event becomes more precise if more than one acoustic signal is analyzed, e.g. by looking at phase differences. At the same time, the adding of integrated acoustic signals from the plurality of sensing means renders the hold touch event decision more robust.

Advantageously, a step of low pass filtering, in particular in the time domain, of the acoustic signal before integration or of the integrated acoustic signal can be included in step b). The signal-to-noise ratio in the low frequency range is further improved and thereby a reliable detection of a hold action is also improved. Preferably, the cut-off frequency is less than 200Hz, preferably less than 100 Hz.

Preferably, the method can comprise a step of amplifying the integrated sensed signal for improving the hold touch information extraction.

Preferably, the method can comprise rejection of a predetermined frequency or frequency range, in particular using a rejection filter, in particular a 50Hz and/or 60 Hz rejection filter to improve the signal quality and thus the signal-to-noise ratio in the low frequency range. With a 50Hz and/or 60 Hz rejection filter, spurious contributions due to mains hum can be reduced.

In an advantageous embodiment, step b) of the method can comprise determining a frequency spectrum of the integrated signal, in particular using Fast Fourier Transform (FFT). The analysis in the frequency domain is simplified. Advantageously, one or more frequency bins, in particular low frequency bins of the FFT, are used for the further processing steps. Thus frequency bins with the best signal-to-noise ratio can be chosen which will improve the reliability of the decision whether the touch event comprises a hold part or not. In a further preferable realization, the frequency bins or bin covering frequencies of 200Hz or less, preferably 100Hz or less, more in particular covering only the range of 50 to 100Hz, deliver an improved signal-to-noise ratio. Further preferred a predetermined number of frames are added up before analyzing the frequency bins.

According to another specific embodiment, the Fourier transformation with summation of frames and selecting of predetermined frequency bins can represent the integration and filtering steps during step b).

In a preferred embodiment, step b) can comprise determining whether the touch event comprises a hold touch event only after having identified a touch location in step a). This will improve the reliability of the process as any hold action has to be preceded by a touch down and thus the determination of the touch location.

In another embodiment, the method can include a step c) of determining a lift-off event of the touch event from the interaction surface and deciding in step b) that a hold touch event took place only if a lift-off event had been identified in step c).The lift-off information of the touch event enhances the reliability of the hold decision as any touch-and-hold touch event must be accompanied by a lift-off. The absence of such a lift-off event may indicate a spurious signal. The use of the determination of a lift-off event may be used to accelerate the decision that a touch-and-hold touch event has come to an end.

Preferably, in step b), the decision that a touch-and-hold touch event is present can be made as long as a parameter of the integral value exceeds a predetermined threshold. Thus the instruction linked to the touch-and-hold touch event can be provided as long as the user carries out the hold action. The parameter could be a variance, an amplitude, etc.

The object of the present invention is also achieved with the touch sensing device described herein. The inventive touch sensing device comprising a touch sensitive interaction surface, at least one acoustic signal sensing means and a processing means, wherein the at least one acoustic signal sensing means is configured to sense an acoustic signal in response to a touch event on the interaction surface, characterized in that the processing means is configured to determine a touch location of the touch event based on a sensed acoustic signal and configured to determine whether the touch event comprises a hold touch event based on an integrated acoustic signal.

As a result of the integration of the acoustic signal, the contribution to the sensed signal that is due to the user still touching the interaction surface will be enhanced and a reliable decision whether the touch event is a touch-and-hold touch event can be taken based on an acoustic signal just like for the determination of the location of the impact at the beginning of the touch event.

The processing unit therefore can comprise an integrator connected to the sensing means in single ended or differential mode, according to specific embodiments.

Preferably, the processing means can comprise a low pass filter configured to filter the acoustic signal or the integrated acoustic signal used to determine the hold touch event. Low frequency information of the sensed signal or the integrated sensed signal is found to improve the reliability of the hold touch detection. The low pass filter has preferably a cut off frequency at below about 200Hz, in particular at about 100Hz.

Preferably, the processing means can comprise a capacitor connected in parallel to the transducer. In this case, both the integration and the low pass filter are performed in the capacitor; thus a simplified device can be realized, according to a specific embodiment.

The processing means can comprise an amplifier configured to amplify the integrated sensed signal. The amplified signals can improve the hold touch information extraction.

Preferably, the processing means can comprise a rejection filter, in particular a 50Hz and/or 60 Hz rejection filter to improve the signal quality and thus the signal-to-noise ratio in the low frequency range. With a 50Hz and/or 60 Hz rejection filter, spurious contributions due to mains hum can be reduced.

Preferably, the acoustic signal sensing means and the processing means are configured such that the signal sensed by the acoustic signal sensing means is used for the touch localization determination and the hold touch determination after integration of the sensed signal. Thus, the same sensing means is used to enable both the localization and the hold contribution which simplifies the design of the device, according to a specific embodiment.

Advantageously, the touch sensing device according to a specific embodiment can comprise a plurality of acoustic signal sensing means and the processing means can be configured to analyze a plurality of sensed acoustic signals from the plurality of sensing means to determine the touch location, and furthermore can be configured to add the integrated sensed acoustic signals from the plurality of sensing means to determine a hold touch event based on the added value. Using more than one sensing means leads to a more precise touch localization determination and a more robust hold touch event decision.

In an alternative embodiment, the device comprises a dedicated acoustic signal sensing means for localization and a dedicated acoustic signal sensing means for the hold determination. In this case each sensing means can be optimized for its respective task.

In some applications, such as when it is desirable to distinguish between a very brief staccato tap and a more leisurely tap, the touch sensing device can comprise a lift-off detection unit configured to determine a lift-off of the touch event from the interaction surface. The lift-off information of the touch event can be used to improve the reliability of the touch-and-hold decision, namely by deciding about the presence of a hold touch event, only in cases where a lift-off has been observed. Thus spurious signals can be set aside and an accelerated decision concerning the end of a touch-and-hold touch event is enabled.

According to a preferred embodiment, the processing unit can be configured to carry out the method as described above.

The object of the invention is also achieved with a computer readable medium including computer executable instructions stored thereon for performing the method(s) as described herein.

Various specific embodiments of the invention will be described in detail with respect to the enclosed figures.
- Figure 1: illustrates schematically a touch sensitive device according to a first embodiment of the invention,
- Figure 2a: illustrates a processing unit of the touch sensitive device according to a first embodiment of the inventive device,
- Figure 2b: illustrates a processing unit according to a second embodiment of the inventive device,
- Figure 3: illustrates a fifth embodiment in which the touch localization analysis and hold touch decision are taken based on signals sensed by two different sensing means.
- Figure 4a: illustrates a sixth embodiment concerning an inventive method to determine a touch-and-hold touch event using a touch sensitive device according to the first or second embodiment.
- Figure 4b: illustrates a sensed acoustic signal representing a touch-and-hold touch event.
- Figure 5a: illustrates a seventh embodiment concerning an inventive method to determine a touch-and-hold touch event using a touch sensitive device according to the third or fourth embodiment.
- Figure 5b: illustrates a sensed acoustic signal after processing in the frequency domain, representing a touch-and-hold touch event.

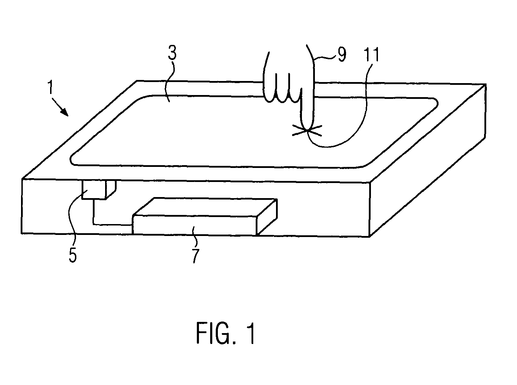

Figure 1 illustrates schematically a touch sensitive device 1 according to a first embodiment comprising a touch sensitive interaction surface 3 via which a user can provide touch based inputs to the touch sensitive device 1. The touch sensitive device 1 according to various embodiments can be any electronic device including stationary devices like desktop computers, vending or automatic teller machines and information screens or hand held mobile devices like a mobile phone, an electronic book reader, a laptop.

The user interaction surface 3 can for instance be part of a touch screen in a specific embodiment, but may be other parts of the device 1 in other embodiments. The device further comprises an acoustic signal sensing means 5 and a processing means 7. In this embodiment only one acoustic signal sensing means 5 is illustrated; however, more than one acoustic signal sensing means can be part of the device 1.

Touch sensitive devices are typically configured such that for a touch event (during which the user just taps at position 11 on the interaction surface 3 and immediately removes his finger from the touch sensitive interface 3) and a touch-and-hold touch event (during which the user taps on the interaction surface 3 and keeps his finger at the same position 11 in contact with the interaction surface 3), two different inputs are identified and accordingly two different actions are carried out by the device.

The inventive touch sensitive device 1 is capable of discriminating between the two types of inputs based on the analysis of sensed acoustic signals.

The acoustic signal sensing means 5 is a transducer transforming the vibrations of the user interaction surface 3 into electrical signals. The acoustic signal sensing means 5 can be any one of a piezoelectric transducer, magnetostrictive piezoelectric transducers, electromagnetic piezoelectric transducers, acoustic velocimeters, accelerometers, optical sensors, microelectromechanical system sensors (MEMs), or the like, according to different embodiments.

When a user touches the interaction surface 3 with an object such as his hand 9 at location 11 of the interaction surface 3, vibrations are injected in the interaction surface 3 and will be sensed by the acoustic signal sensing means 5. The sensed signal is then transferred to the processing means 7 which is configured to determine the position 11 of the touch event.

According to the first embodiment of the invention, the acoustic signal sensed by the sensing means 5 is also used to determine whether the touch event comprises a hold part. To do so, the sensed signal is integrated and the decision whether the touch event is a touch-and-hold touch event is taken in case a predetermined property of the integrated acoustic signal exceeds a certain threshold value, as will be explained in more detail with respect to the following figures.

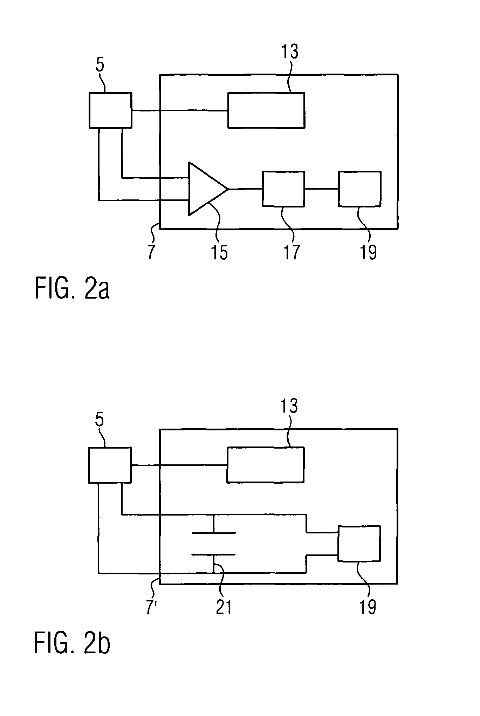

Figure 2a illustrates the processing means 7 of the touch sensitive device 1 of the first embodiment of the invention illustrated in Figure 1.

The processing means 7 comprises a touch position determining unit 13, which determines the position 11 of a touch event on the interaction surface 3 by analyzing the properties of the sensed signal, e.g. comparing them to predetermined acoustic reference signatures, using a process as known in the art.

The processing means 7 further comprises an integrator 15 connected to the acoustic signal sensing means 5 in single ended or differential mode for integrating the acoustic signals sensed by the acoustic signal sensing means 5. The integrator 15 can be any one of commercially available electronic circuit and might be realized in one integrated circuit or using a set of several active and passive components.

The integrator 15 is connected to a low pass filter 17 for filtering out the high frequency contribution. The low pass filter 17 has a cut off frequency at about 200Hz, in particular at about 100Hz.

The processing means 7 furthermore comprises a hold touch decision unit 19 which analyzes the integrated and filtered acoustic signal and decides that the touch event is a touch-and-hold touch event when the integrated and filtered acoustic signal satisfies a predetermined parameter. For instance, statistic properties of the integrated and filtered acoustic signal could form the basis of a decision about the presence or absence of a hold touch event. For instance, as will be explained further below, the variance of the integrated and filtered acoustic signal can be used to point out the signal's movement over time. Typically in the presence of a hold touch event the variance of the signal is greater than in the absence of a hold touch event. According to a variant, a rectifying step could be carried out on the integrated and filtered acoustic signal to change a signal that typically averages around zero to a positive average value thereby simplifying the decision taking step.

According to a variant of the first embodiment, the integrated and filtered signal is filtered by a 50Hz/60Hz rejection filter and/or is amplified by an amplifier before being analyzed in the hold touch decision unit 19.

Figure 2b illustrates a processing unit 7' of a touch sensitive device 1 according to a second embodiment. In this embodiment the integration and low pass filtering is achieved using a capacitor 21 connected in parallel to the transducer 5. The output of the capacitor can then be directly used to determine the presence of a hold touch in the hold touch decision unit 19 which has the same properties as the one of the specific embodiment of Figure 2a. In the embodiment of Figure 2b, the number of components is reduced compared to the one of Figure 2a.

As a variant of this embodiment, an amplifier and/or a 50Hz/60Hz rejection filter could be added between the capacitor 21 and the hold touch decision unit like in the embodiment illustrated in Figure 2a.

A third and fourth embodiment of the invention relate to a variation of the first and second embodiment and consist in providing an analog-to-digital converter (not shown in Figures 2a and 2b) for converting the integrated sensed signal into a digital signal. The analog-to-digital converter can be placed after any one of the integrator 15, the low pass filter 17, capacitor 21 and the amplifier and/or rejection filter, if present. If the integrator 15 or the low pass filter 17 is provided after the analog-to-digital converter, then they may take the form of digital processing algorithms rather than analog signal processing via physical circuits according to specific embodiments. The quality of the extracted hold information can be improved by digitally processing the integrated signal using the analog-to-digital converter.

The hold touch decision unit 19 in the third and fourth embodiment determines a frequency spectrum of the integrated signal. The frequency spectrum of the integrated signal is computed using, for example, a Fast Fourier Transform (FFT). In a practical example the frame size of the FFT is 2048 with an overlap of 50%. Integration is further achieved by adding the results of a plurality of frames, e.g. five, before checking whether a threshold value is exceeded or not. Working in the frequency domain simplifies data analysis and thus contributes to a reliable decision taking concerning the presence or absence of a hold touch event.

The FFT delivers a complex function of frequency and for the decision taking process various properties of the FFT could be used. For instance, only the modulus value of the complex numbers or the absolute value of the real and/or imaginary part could be used of the results of the FFT for further analysis.

The hold touch decision unit 19 in a variant of the third and fourth embodiment is furthermore configured to analyze low frequency information of the frequency spectrum, e.g. by only using some frequency bins, in particular towards low frequencies, where the signal-to-noise ratio is better. In the set-up of a 50 kHz sampling and 2048 frames with 50 % overlap, it has been found out that an optimized signal-to-noise ratio is observed in frequency bin two. Thus the decision taking step in this variant is reduced to checking whether the value of frequency bin two or a sum of frequency bin two over a plurality of frames exceeds a certain threshold, e.g. 12dB. Of course the FFT could also be carried out for other frame size values, and overlaps and more than just one bin could be used for the decision taking step. Frequency bin 0 and/or 1 could also be used in addition or as an alternative to frequency bin 2.

According to a variant of the first to fourth embodiments, the touch sensitive device 1 comprises more than one acoustic signal sensing means 5 and the processing unit analyzes the sensed signals to determine the touch location based on the sensed acoustic signals, or combinations of the sensed signals, like phase difference profiles. Concerning the hold touch decision, the processing unit 7 is configured to integrate the signals from each one of the plurality acoustic signal sensing means 5 and adds the integrated signals before taking the hold touch decision based on one of the methods described above. By adding the integrated acoustic signals from the plurality of acoustic signal sensing means 5, the hold touch decision is more robust as the signal-to-noise ratio is improved.

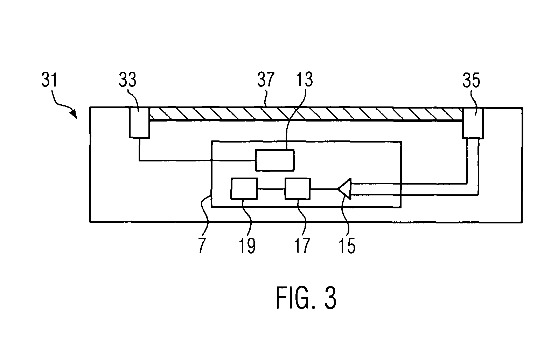

Figure 3 illustrates a fifth embodiment of a touch sensitive device 31 according to the invention. The difference between this embodiment and the first embodiment is the fact that the touch localization and hold touch are determined based on acoustic signals which have not been sensed by the same acoustic signal sensing means. Accordingly the touch sensitive device 31 comprises a first acoustic signal sensing means 33 and a second acoustic signal sensing means 35 configured to sense acoustic signals propagating in the touch sensitive user interaction surface 37.

The first acoustic signal sensing means 33 is connected to the position determining unit 13 of the processing unit 7 and the second acoustic signal sensing means 35 is connected to the integrator 15, in turn connected to the low pass filter 17 and the hold touch decision unit 19. Again, the hold touch decision can be based on the sum of integrated sensed signals provided by more than one second acoustic signal sensing means 35 to improve the signal-to-noise ratio.

The fifth embodiment can also be realized with the processing unit 7' of the second embodiment and also according to additional variants could comprise a 50Hz/60Hz rejection filter and/or amplifiers and/or the analog to digital converter and FFT based analysis including the rectifying and/or modulus or absolute value determination like in the third and fourth embodiment.

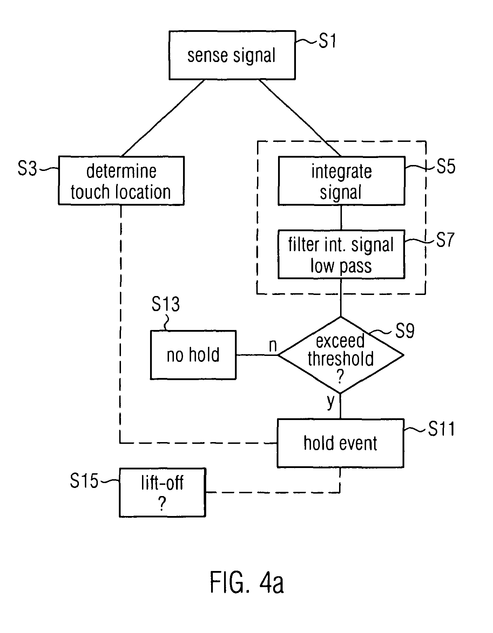

Figure 4a illustrates a method according to a sixth embodiment for determining the touch-and-hold touch event on the touch sensitive interaction surface 3 using the touch sensing device 1 or 31 of the first or second embodiment or the touch sensing device 31 according to the fifth embodiment.

The sixth embodiment of the method according to the invention and as illustrated in Figure 4a comprises the following process steps:

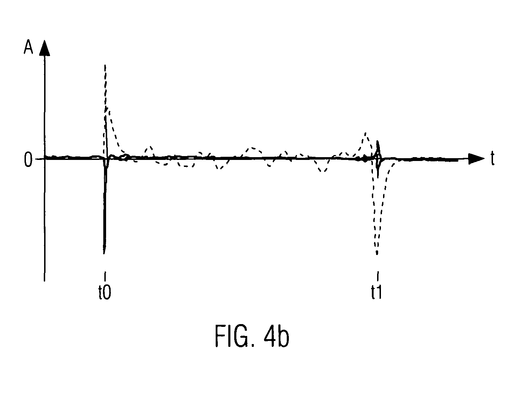

In step S1, a signal corresponding to a touch event provided by a user 9 at location 11 on the touch sensitive interaction surface 3 is sensed by the sensing means 5. Figure 4b illustrates schematically such a signal. The signal in Figure 4b only serves for illustrational purposes and does not reflect precisely the time dependency of the signal and the integrated signal.

In step S3, the sensed signal is analyzed by the touch position determining unit 13 which determines based on the properties of the acoustic signal at time t0 that a touch event has occurred and that this touch event took place at location 11 on the touch sensitive interaction surface 3. To do so the signal of one or more additional sensing means might eventually be necessary as is known from the art.

In step S5, the sensed signal is integrated using integrator 15 over a certain time duration and in step S7 low pass filtered using the filter 17. If the device 1 of Figure 2b according to the second embodiment is used, steps S5 and S7 are carried out at the same time, as indicated by the dotted lines. An additional amplifying step and/or rejecting filtering step at 50 and/or 60Hz could be added according to a variant.

Integration and filtering has the effect that the small wiggles, observable in the sensed signal after t0 and which are predominantly present for small frequencies below 100Hz or even below 50Hz and which are due to the finger of or an object held by the user resting on the interaction surface 3, are amplified so that the signal-to-noise ratio becomes better. The integrated and filtered signal is indicated in dotted lines.

In step S9 the integrated and filtered signal is then compared to a predetermined threshold to be able to take the decision whether or not the touch event is accompanied by a hold touch event. In this specific embodiment, the filtered and integrated acoustic signal has not been rectified, so that it still oscillates around the zero position. In this case a suitable parameter to take the decision would be the signal variance. As long as the signal variance is above a predetermined threshold, the decision can be taken that a hold touch event takes place at the interaction surface 3 (step S11). If the threshold is not exceeded, no hold (S13) is present. The hold touch event decision S11 is taken as long as the integrated and filtered signal exceeds the threshold of S9.

Of course signal variance is not the only possibility to take this decision. If a rectified signal is formed that no longer oscillates around zero, other parameters like amplitude, square of amplitude etc, could also reflect suitable parameters to take decision about the presence of a hold touch event.

According to a first variant of the sixth embodiment, the decision that the touch event is a hold touch event during which the user keeps his finger on the interaction surface is only taken, if prior to passing the threshold in step S9 a touch location has been identified in step S3. This is schematically indicated in Figure 4a by a dotted line between S3 and S11. This variant has the advantage that the hold decision cannot be taken for a spurious signal occurring with the detection of a touch down in step S3. This will thus improve the reliability of the process.

According to a second variant of the sixth embodiment which could also be combined with the first variant of the sixth embodiment, the hold touch event decision in S11 is only taken if a lift-off has been identified based on the sensed signal, here at time stamp t1. This is schematically illustrated by broken lines and step S15. Step S15 could actually be carried out by the touch position determining unit 13 as the properties of the sensed signal at t0 and t1 are somehow comparable. Eventually a dedicated lift-off determining unit could also be added to the processing unit 7. In another realization the lift-off detection could also be used to just confirm the end of a hold touch event.

In case of non rectified acoustic signals, like illustrated in Figure 4b, the opposite sign of the signal at touch down (t0) and lift-off (t1) could also be exploited to confirm the hold decision taken between the two instances t0 and t1.

The method might further be improved by realizing a noise level determining step, where the background noise level determined is subtracted from the integrated and filtered signal, prior to the decision taking step S9.

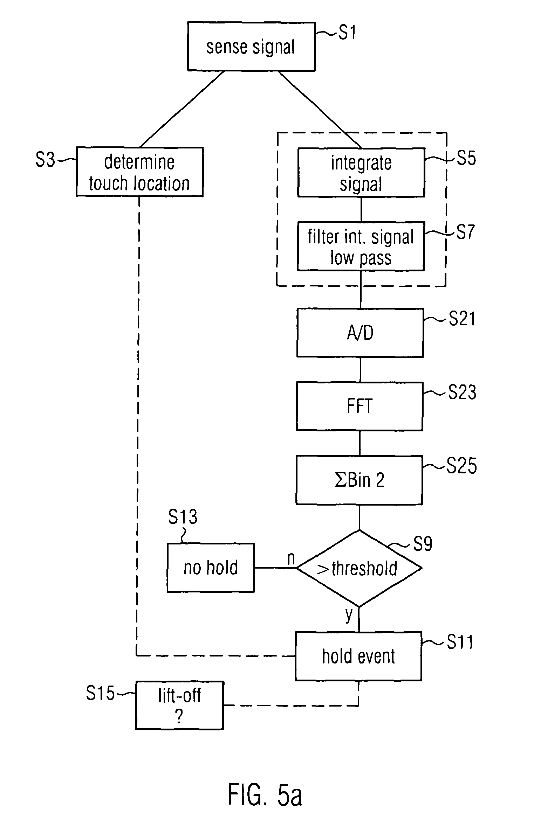

Figure 5a illustrates a seventh embodiment concerning an inventive method to determine a touch-and-hold touch event using a touch sensitive device according to the third or fourth embodiment. Method steps S1 to S15 which are the same as in the sixth embodiment are not described again but their description is incorporated herewith by reference. Amplification and/or rejection filtering steps at 50 and/or 60 Hz can be carried out in addition.

In this embodiment, after the signal integration and low frequency filtering, an analog-to-digital conversion is carried out in step S21 and a FFT transformation is then applied to the digitized data in step S23. The FFT is preferably carried out for a 50 kHz sampling with a frame size of 2048 and a 50% overlap, but of course other FFT parameters, like a frame size of 1024, could also be used. In this specific embodiment the FFT analysis does not deliver the complex function in the frequency domain for further analysis but only the modulus values or the absolute values of the real and/or imaginary part.

Once the FFT is carried out, the method according to the seventh embodiment proceeds with step S25 which consists in choosing low frequency bins of the FFT, in particular only bin 2, and to sum over a plurality of frames, in particular five frames. It has been observed that for bin 2 the best signal-to-noise ratio for hold contributions can be observed. According to further variants also the information contained in frequency bin 0 and/or 1 could be used instead or in addition to frequency bin 2. In this practical example, frequency bin 2 relates to a frequency range of about 50 to 75 Hz.

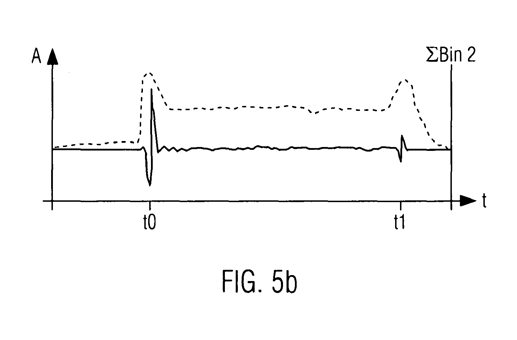

Figure 5b illustrates the corresponding data. Whereas the solid line illustrates the sensed signal as a function of time, just like in Figure 4b, the dotted line illustrates the summation over five frames of bin 2 as a function in time. It can be clearly identified that between the touch down and lift-off at t0 and t1, the summation over bin 2 represents a higher value than in the absence of a hold touch event. Due to the use of absolute values or the modulus only, the bin 2 contribution does not oscillate around zero, like the integrated and filtered signal in Figure 4b.

Thus, in step S9 a reliable decision concerning the presence or absence of a hold touch event can be taken, by checking whether the amplitude of the bin 2 contribution exceeds a certain threshold or not.

Like for the sixth embodiment, the variants as described above can also be implemented into the method according to the seventh embodiment.

Yet another specific embodiment of the method according to the invention consists in omitting steps S5 and/or S7 in the method as described with respect to Figure 5a. Indeed, by looking only at a specific bin, the filtering step is carried out and by adding a plurality of frames integration according to the invention is also achieved.

With the inventive devices and the inventive methods according to the embodiments one to seven and their respective variants touch-and-hold touch events can be reliably discriminated from touch events without holding the touch down. Unlike in the prior art, this is achieved using the same kind of acoustic signals for both properties. By integrating the sensed acoustic signal and concentrating on low frequencies a touch down signal can be identified above noise level. Thus compared to the prior art a simplified way of detecting touch-and-hold is provided by the invention according to specific embodiments. The features of various embodiments and their variants can be freely combined to obtain further realizations of the invention.

## Claims

1. A method for determining a touch-and-hold touch event on a touch sensitive interaction surface of a touch sensing device comprising the steps of:
a) determining a touch location of the touch event based on at least one sensed acoustic signal and
**characterized in**
b) determining whether the touch event comprises a hold touch event based on an integrated acoustic signal.

2. The method according to claim 1, further comprising prior to step a) and b) receiving at least one acoustic signal sensed by at least one sensing means, wherein step a) comprises determining the touch location based on at least one of the at least one sensed received acoustic signal and step b) comprises integrating at least one of the at least one received sensed signal.

3. The method according to claim 2, wherein step a) and b) are carried out using the same sensed acoustic signals.

4. The method according to claim 2 or 3, wherein step a) comprises analyzing a plurality of sensed acoustic signals from a plurality of sensing means to determine the touch location, and step b) comprises adding the integrated sensed acoustic signals from the plurality of sensing means and determining whether a hold touch event is present based on the added value.

5. The method according to one of claims 1 to 4, wherein step b) comprises a step of low pass filtering, in particular in the time domain, the acoustic signal before integration or the integrated acoustic signal.

6. The method according to one of claims 1 to 5, further comprising a step of amplifying the integrated sensed signal.

7. The method according to one of claims 1 to 6, further comprising a step of rejecting a predetermined frequency and/or frequency range, in particular using a 50Hz and/or 60 Hz rejection filter.

8. The method according to any one of claims 1 to 7, wherein step b) comprises determining a frequency spectrum, in particular using Fast Fourier Transform (FFT).

9. The method according to claim 8, further comprising choosing one or more frequency bins out of the frequency bins of the FFT for step b).

10. The method according to any one of claims 1 to 9, wherein step b) only determines whether the touch event comprises a hold touch event after having identified a touch location in step a).

11. The method according to any one of claims 1 to 10, further comprising a step c) of determining a lift-off of the touch event from the interaction surface and deciding in step b) that a hold touch event took place only if a lift-off event had been identified in step c).

12. The method according to any one of claims 1 to 11, wherein step b) comprises deciding that a touch-and-hold touch event is present as long as a predetermined parameter of the integral and/or the one or more frequency bins exceeds a predetermined threshold value.

13. A touch sensing device comprising a touch sensitive interaction surface (3), at least one acoustic signal sensing means (5) and a processing means (7), wherein the at least one acoustic signal sensing means (5) is configured to sense an acoustic signal in response to a touch event on the interaction surface (3),
**characterized in that**
the processing means (7) is configured to determine a touch location (11) of the touch event based on a sensed acoustic signal and configured to determine whether the touch event comprises a hold touch event based on an integrated acoustic signal.

14. The touch sensing device according to claim 13, wherein the processing means (7) further comprises a low pass filter (17) configured to filter the acoustic signal or the integrated acoustic signal used to determine the hold touch event.

15. The touch sensing device according to one of claims 13 or 14, wherein the processing means (7') comprises a capacitor (21) connected in parallel to the sensing means.

16. The touch sensing device according to any one of claims 13 to 15, wherein the processing means (7) further comprises an amplifier configured to amplify the integrated sensed signal.

17. The touch sensing device according to one of claims 13 to 16, wherein the processing means comprises a rejection filter, in particular a 50Hz and/or 60 Hz rejection filter.

18. The touch sensing device according to any one of claims 13 to 17, wherein the acoustic signal sensing means (5) and the processing means (7) are configured such that the signal sensed by the at least one acoustic signal sensing means (5) is used for the touch localization determination and the hold touch determination after integration of the sensed signal.

19. The touch sensing device according to claim 18, comprising a plurality of acoustic signal sensing means (5) and wherein the processing means is configured to analyze a plurality of sensed acoustic signals from the plurality of sensing means to determine the touch location, and furthermore configured to add the integrated sensed acoustic signals from the plurality of sensing means and to determine a hold touch event based on the added value.

20. The touch sensing device according to any one of claims 13 to 19, further comprising a lift-off detection unit configured to determine a lift-off of the touch event from the interaction surface (3).

21. The touch sensing device according to one of claims 13 to 20, wherein the processing unit is configured to carry out the method according to one of claims 1 to 12.

22. A computer readable medium including computer executable instructions stored thereon for performing the method of at least one of claims 1 to 12.
